# EUROPEAN PATENT APPLICATION

(11) **EP 1 298 808 A2**
(43) Date of publication of application: **02.04.2003**
(21) Application number: 02011730.5
(22) Date of filing: 27.05.2002
(51) Int. Cl.: H04B 1/38

(54) **Mobile radio communications units**

(30) Priority: 27.09.2001 GB 0123218
(71) Applicant: MOTOROLA, INC., Schaumburg, IL 60196 (US)
(72) Inventor: Roed, Per, 4070 KR-Hyllinge (DK)
(74) Representative: McCormack, Derek James

(57) **Abstract**

A radio unit for use in mobile communications, the unit comprises an input transducer, e.g. microphone to convert speech of a user into electrical signals, a transmitter for converting the electrical signals produced by the transducer into modulated radio frequency (r.f.) signals for sending to a distant receiver and an arrangement for indicating to the user the level of sound intensity of the user's speech recorded at the input transducer, the arrangement comprising a detector for detecting for one or more given periods of time the peak intensity of sound received at the input transducer, display driver means for producing an electrical display driver signal indicative of the peak intensity of sound in one or more measurement periods and an electro-optical display operable by input of the electrical display driver signal to display an image representing the measured peak intensity of sound for one or more measurement periods.

## Description

### Field of the Invention

This invention relates to mobile radio communications units especially units for speech communications.

### Background of the Invention

Mobile radio communications units for speech communication between two or more users are generally units which are designed to allow the user to make radio communications whilst mobile, e.g. to be portable by the user or to be carried by a vehicle in which the user is travelling. Such units may generally comprise an input audio transducer such as a microphone for converting speech of a user into representative electrical signals, transmission circuitry for converting the electrical signals into radio frequency (r.f.) signals and a radiator, e.g. antenna, for delivering a radio transmission containing the r.f. signals to a remote receiver. The remote receiver may be a similar unit. Both units may also comprise a receiving detector, e.g. antenna, receiver circuitry for re-converting the received r.f. signals back to the form of electrical signals and an output transducer to re-convert the signals to audio information representing the speech of the remote user. A single antenna may be used for both transmission and receipt of r.f. signals and a single transceiver may be used for both the transmission and receiver circuitry. The transceiver may operate in an analogue or digital mode.

In radio units, both analogue and digital, the r.f. signals generated by the transmission circuitry generally comprise a modulation signal superimposed on an r.f. carrier signal. The modulation signal embodies the speech information. There are three basic well known kinds of modulation which may be used, namely amplitude modulation, frequency modulation and phase modulation.

A maximum modulation level is usually employed. In an analogue radio this limit is set by the maximum frequency deviation which is permitted by the air interface protocol by which the radio is operating. In a digital radio, this limit is set by a limitation on the number of bits possible according to the air interface protocol. To obtain the best possible communication quality, it is important that the modulation level is high enough to suppress ambient noise (for both talker and listener), but not so high that distortion occurs. The modulation level for portable and mobile radios having a microphone as input transducer is proportional to the sound intensity received at the microphone, and this depends on the amplitude of the audio signals or sound waves of the speech of the person speaking into the microphone and the distance of the mouth of the person speaking to the microphone. The person speaking can change the sound intensity at the microphone by changing the amplitude of his/her speech and/or the distance from the microphone, but he/she is not able to know whether a suitable modulation level results.

### Summary of the present invention

According to the present invention there is provided a radio unit for use in mobile communications, the unit comprising an input transducer to convert speech of a user into electrical signals, a transmitter for converting the electrical signals produced by the transducer into modulated radio frequency (r.f.) signals for sending to a distant receiver and an arrangement for indicating to the user the level of sound intensity of the user's speech recorded at the input transducer, the arrangement comprising a detector for detecting for one or more given periods of time the peak intensity of sound received at the input transducer, display driver means for producing an electrical display driver signal indicative of the peak intensity of sound in one or more measurement periods and an electro-optical display operable by input of the electrical display driver signal to display an image representing the measured peak intensity of sound for one or more measurement periods.

The input transducer may comprise a microphone forming an integral part of the radio unit or an external microphone or mouthpiece, e.g. connected by a conduit to the radio unit.

The said detector may comprise a peak detector which detects and produces an output according to the peak intensity of sound detected at the input transducer, e.g. by sampling an output electrical signal, optionally further processed e.g. by amplification and/or filtering, produced by the input transducer.

The electro-optical display may form an integral part of the construction of the radio unit although it could alternatively be a separate connected unit. The electro-optical display is operable to display information to the user giving a representation of the magnitude of the measured peak intensity for one or more given periods. For example, the display may be operable to show a graphical image of the measured peak intensity, such as a line or trace extending horizontally but varying in vertical position, the vertical position of the line being determined by the measured intensity for a given period.

Alternatively, or in addition, the display may show a chart comprising a plurality of lines or bars, e.g. vertical lines or bars, the height of each line or bar representing measurement of the peak sound intensity for each given period of time.

Where a sequence of time measurement periods is used, each quantised measurement period(s) of time over which the peak intensity is measured may be from 0.1 second to 10 seconds, preferably from 1 second to 5 seconds. For a sampled length of time extending over a series of successive contiguous measurement time periods, the user may see in a single displayed frame of the electro-optical display the measured peak intensity as a function of time by observing the variation with time of displayed signal e.g. line or bar, representing peak intensity. Time may be shown as the horizontal scale of the displayed image where peak intensity is shown measured for different time periods along a vertical scale.

The radio unit according to the invention may include a memory, such as a buffer store memory, which holds signals output by the said detector for a delay period before passing the signals to the display driver means. This allows, for example, values of intensity measurements taken whilst a user is speaking to be displayed when the user finishes speaking, as detected in a known way by control electronics of the radio unit.

Where the display shows graphically the measured peak intensity for one or more given periods of time, the scale of the displayed signal may be selected whereby the optimum intensity level appears at or near to the middle of the scale. The displayed scale may be a linear representation of the intensity measured in decibels (dB). Thus, the vertical scale of the display may represent measured sound intensity in dB and the horizontal scale may represent time of measurement in seconds.

The electro-optical display may comprise a liquid crystal display, an electroluminescent display, a light emitting diode display or any other display of the kinds known in the electro-optical display art, all constructed and operated in a manner known in the art.

The detector of the radio unit according to the invention may comprise a sensor operably coupled to the input transducer which is able to detect for one or more given periods of time the peak value of the output of the input transducer during the period. The sensor may be operable to produce a signal, e.g. a digital signal, which indicates the measured peak output from the input transducer for a given period. A processor, which may be a processor already present in the radio unit suitably programmed to carry out the new functions described herein, may be included in the arrangement to convert the signal or a sequence of such signals produced by the detector into a corresponding display driver voltage or sequence of display driver voltages to produce the required display representative of the measured peak output of the input transducer for each measured period.

The radio unit according to the first aspect of the invention may be a portable or mobile radio or radiotelephone or the like. It may be an analogue or digital unit. The invention is particularly useful when the radio unit is to be used in known methods of communication with other similar units, e.g. direct mode communications (radio direct to radio) or trunked mode communications (radio to radio via fixed system infrastructure, e.g. base transceiver stations. The radio may for example be a digital unit designed to operate in accordance with TETRA (Terrestrial Trunked Radio defeined by the European Telecommunications Standards Institute) or other standard protocols.

The transmitter in the radio unit according to the invention may include a modulation signal generator operable to receive as an input an output from the input transducer optionally processed, e.g. by amplification and filtering, means for generating a r.f. carrier signal and a modulator for combining outputs of the modulation signal generator and the means for generating a r.f. carrier signal. The modulation signal produced by the modulation signal generator may be of a known kind, e.g. to give amplitude or frequency modulation.

Beneficially, the radio unit of the invention provides valuable visible feedback to the user allowing the user to know whether the intensity level of the user's speech should be increased or decreased so that a modulation level approaching optimum giving good communications quality can be achieved.

Embodiments of the present invention will now be described with reference to the accompanying drawings, in which:

### Brief description of the drawings

Figure 1 is a simplified block circuit diagram of a radio unit embodying the invention.
Figures 2 to 4 are examples of graphical images displayed by the display of the radio unit shown in Figure 1.

### Description of embodiments of the invention

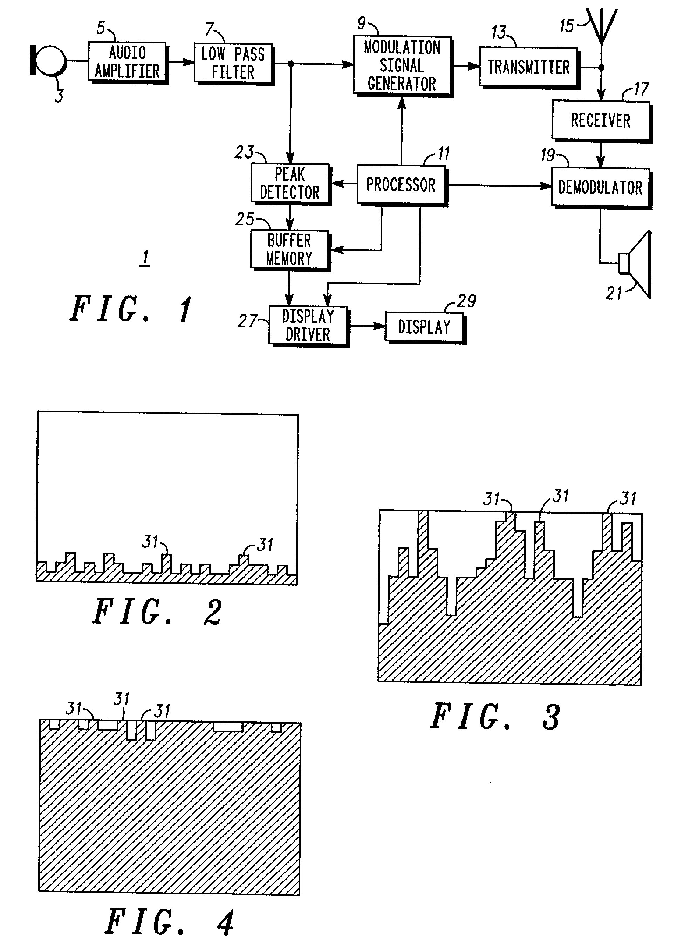

As shown in Figure 1, a radio unit 1 for use in mobile communications includes a microphone 3 connected in turn to an audio amplifier 5 and a low pass filter 7. Speech of a user is detected by the microphone 3 which delivers a corresponding low frequency electrical signal to the amplifier 5 in which it is amplified and then filtered by the low pass filter 7.

The output of the filter 7 is applied to a modulation signal generator 9 operating under control of a processor 11. In a conventional way, using as its input the output of the filter 7, the modulation signal generator 9 produces a modulation signal which is applied to a separately produced r.f. carrier signal in a transmitter 13. A modulated r.f. signal is produced by the transmitter 13 and is sent via an antenna 15 to a distant receiver (not shown), e.g. a similar radio unit of another user with whom the first mentioned user is communicating.

An incoming r.f. signal from the distant receiver is received by the antenna 15 and passed in turn to a receiver 17 and demodulator 19 also operating under control of the processor 11. The receiver 17 and demodulator 19 are known circuits which detect the received r.f. signal and extract a low frequency electrical signal representing speech of a distant user. The extracted signal is converted to audible form by a speaker 21.

When the radio unit 1 is being used to transmit speech information, the magnitude of the output of the filter 7 represents the intensity of the sound energy detected by the microphone 3. A peak detector 23 samples the output of the filter 7 and under control of the processor 11 detects for each of a given series of quantised measurement periods the measured signal peak during the measurement period and accordingly produces an output comprising a signal representing each measured peak value, i.e. comprising a series of different values for the various measurement periods. The output of the peak detector 23 is applied to a buffer memory 25 under control of the processor 11 which allows the output to be temporarily delayed before being delivered to a display driver 27 also operating under control of the processor 11. For example, the measurement periods during which the peak intensity is sampled may be periods whilst speech by the user is taking place whereas the memory 25 may hold the measured peaks values until speech by the user has ended before delivering the output of the peak detector 23 to the display driver 27.

The display driver 27 produces display driver voltages which operate an electro-optical display 29 in a conventional manner. The input to the display driver 27 from the buffer memory 25 causes the display driver 27 to produce an output such as a set of display driver voltages which will provide on the display 29 a graphical image as described earlier showing the peak values as measured by the peak detector for each of the measurement periods.

The display 27 may display other information commonly displayed relating to the various functions of the radio unit 1. Such information is obtained from the processor 11 by application of signals to the display driver 25 in a known manner. Thus, the display 27 may have a plurality of display modes.

Figures 2 to 4 are examples of graphical images shown on the display 29. Each image consists of a series of vertical bars 31 each representing the measured peak sound intensity value and therefore corresponding modulation level for a given measurement period, e.g. 3 seconds, in a sequence of contiguous measurement periods. Thus, the vertical scale of the image shown in Figures 2 to 4 represents sound intensity and the horizontal scale represents time. The time displayed may be only a sampled part of the length of time for which the user speaks.

The vertical scale of the bars 31 in Figures 2 to 4 is adjusted (by an appropriate signal from the processor 11 to the display driver 27 in Figure 1) so that the optimum signal level required to be applied from the low pass filter 7 to the modulation signal generator 9 (Figure 1) corresponds to an average height of the bars which is about half of the maximum height possible for the bars displayed. Thus, in Figure 2 the average signal input to the modulator 9 is low and will indicate to the user that he/she should increase speech sound intensity. In Figure 3, the average level of the signal input to the modulator 9 is close to the optimum level required. In Figure 4, the average signal input to the modulator 9 is high and will indicate to the user that the sound intensity of his/her speech should be reduced to give an image similar to that shown in Figure 3.

## Claims

1. A radio unit for use in mobile communications, the unit comprising an input transducer to convert speech of a user into electrical signals, a transmitter for converting the electrical signals produced by the transducer into modulated radio frequency (r.f.) signals for sending to a distant receiver and an arrangement for indicating to the user the level of sound intensity of the user's speech recorded at the input transducer, the arrangement comprising a detector for detecting for one or more given periods of time the peak intensity of sound received at the input transducer, display driver means for producing an electrical display driver signal indicative of the peak intensity of sound in one or more measurement periods and an electro-optical display operable by input of the electrical display driver signal to display an image representing the measured peak intensity of sound for one or more measurement periods.

2. A radio unit according to claim 1 and wherein the input transducer comprises a microphone forming an integral part of the radio unit or an external microphone or mouthpiece connected to the radio unit.

3. A radio unit according to claim 1 or claim 2 and wherein the said detector comprises a peak detector which detects and produces, for a given measurement period, an output signal according to the peak intensity of sound detected at the input transducer.

4. A radio unit according to claim 3 and wherein the peak detector is operable to sample an output electrical signal, optionally after further processing, produced by the input transducer.

5. A radio unit according to claim 3 or claim 4 and wherein the peak detector is operable to detect a peak value and produce a corresponding output for each of a sequence of measurement time periods.

6. A radio unit according to any one of the preceding claims and which includes a memory in which an output signal produced by the detector may be stored temporarily and applied to the display driver means after a delay.

7. A radio unit according to any one of the preceding claims and wherein the electro-optical display forms an integral part of the construction of the radio unit.

8. A radio unit according to any one of the preceding claims and wherein the electro-optical display is operable to display a graphical image of the measured peak intensity for each measurement period.

9. A radio unit according to claim 8 and wherein the graphical image comprises a line or trace extending horizontally but varying in vertical position, the vertical position of the line being determined by the measured intensity for a given period.

10. A radio unit according to claim 8 or claim 9 and wherein the display is operable to show a chart comprising a plurality of lines or bars, the length of each line or bar representing measurement of the peak sound intensity for each given period of time.

11. A radio unit according to claim 10 and wherein the lines or bars are shown vertically when the display is upright and the graphical image shows measured intensity on a vertical scale against time on a horizontal scale.

12. A radio unit according to any one of the preceding claims and wherein the unit is operable such that a sequence of quantised time measurement periods is used for measurements by the detector, and each quantised measurement period(s) is from 0.1 second to 10 seconds.

13. A radio unit according to any one of claims 9 to 12 and wherein the measurement periods are over a sampled part of the time the user is speaking using the radio unit.

14. A radio unit according to any one of the preceding claims and wherein the unit is operable to display an image of the measured intensity after the user has finished speaking using the radio unit.

15. A radio unit according to any one of the preceding claims and wherein the unit is operable such that the display shows graphically the measured peak intensity for one or more given periods of time, the scale of the displayed signal being selected whereby the optimum intensity level appears at or near to the middle of the scale.

16. A radio unit according to any one of the preceding claims and wherein the electro-optical display comprises a liquid crystal display, an electroluminescent display, a light emitting diode display.

17. A radio unit according to any one of the preceding claims and wherein the radio unit comprises an analogue or digital portable or mobile radio or radiotelephone or the like.

18. A radio unit according to any one of the preceding claims and wherein the radio unit is operable to make communications in a direct mode of operation.
